(19) Europäisches Patentamt
European Patent Office
Office européen des brevets

(11) **EP 3 416 921 B1**

## (12) EUROPÄISCHE PATENTSCHRIFT

(45) Veröffentlichungstag und Bekanntmachung des Hinweises auf die Patenterteilung:
**26.02.2020** **Patentblatt 2020/09**

(21) Anmeldenummer: **16810274.7**

(22) Anmeldetag: **01.12.2016**

(51) Int Cl.:
*C03B 33/02* (2006.01)      *B23K 26/00* (2014.01)
*B24D 3/00* (2006.01)      *B23K 26/0622* (2014.01)
*B23K 103/00* (2006.01)      *B23K 26/53* (2014.01)

(86) Internationale Anmeldenummer:
**PCT/EP2016/079411**

(87) Internationale Veröffentlichungsnummer:
**WO 2017/140394 (24.08.2017 Gazette 2017/34)**

(54) **VERFAHREN ZUR KANTENBEARBEITUNG VON GLASELEMENTEN UND VERFAHRENSGEMÄSS BEARBEITETES GLASELEMENT**

METHOD FOR MACHINING THE EDGES OF GLASS ELEMENTS AND GLASS ELEMENT MACHINED ACCORDING TO THE METHOD

PROCÉDÉ POUR LE FAÇONNAGE DES CHANTS D'ÉLÉMENTS EN VERRE ET ÉLÉMENT EN VERRE FAÇONNÉ SELON CE PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.02.2016 DE 102016102768**

(43) Veröffentlichungstag der Anmeldung:
**26.12.2018 Patentblatt 2018/52**

(73) Patentinhaber: **Schott AG**
**55122 Mainz (DE)**

(72) Erfinder:
• **PLAPPER, Volker**
  **55232 Alzey (DE)**
• **WAGNER, Fabian**
  **55118 Mainz (DE)**

• **ORTNER, Andreas**
  **55435 Gau-Algesheim (DE)**
• **SEIDL, Albrecht**
  **63843 Niedernberg (DE)**
• **LENTES, Frank-Thomas**
  **55411 Bingen (DE)**

(74) Vertreter: **Blumbach · Zinngrebe Patentanwälte PartG mbB**
**Alexandrastraße 5**
**65187 Wiesbaden (DE)**

(56) Entgegenhaltungen:
WO-A2-2015/113026      US-A1- 2014 340 730
US-A1- 2015 165 548      US-A1- 2015 166 393
US-A1- 2015 232 369

EP 3 416 921 B1

**Beschreibung**

Die Erfindung betrifft allgemein die Bearbeitung der Kanten von Glasscheiben. Insbesondere betrifft die Erfindung eine Bearbeitung der Kanten mit unterschiedlichen Verfahren.

Zur Herstellung eines flächigen Glas- oder Glaskeramikelements wird typischerweise ein größeres flaches Element durch einen oder mehrere Trennschritte zerteilt und so auf das gewünschte Maß gebracht. Anschließend ist im Allgemeinen eine Bearbeitung der Kante notwendig. Beim Vereinzeln hat sich mechanisches Ritzen und Brechen etabliert, aber auch Durchschmelzen oder abrasive Prozesse wie Wasserstrahltrennen sind bekannt.

Jedes dieser Verfahren hat bestimmte Nachteile, wie etwa eine geringe mechanische Festigkeit oder eine geringe Formtreue. So steigen beispielsweise bei Ritzen und Brechen mit zunehmender Dicke die Formfehler durch schräg induzierte Brüche an. Beim Wasserstrahlschneiden entsteht verfahrensbedingt eine schräg verlaufende Trennfläche, da beim Wasserstrahlschneiden eine keilförmig zulaufende Nut erzeugt wird.

Bei den verschiedenen Trennprozessen kann es an den Kanten aber zu Ausmuschelungen und Mikrorissen kommen, womit die resultierende Festigkeit stark reduziert oder die vorgesehene Kontur des Werkstücks verändert wird.

Mit steigender Risslänge wird die Festigkeit der Kante herabgesetzt, wobei gilt:

$$a = \left( \frac{K_{1c}}{2\sigma_{res}} \right)^2$$

Hierbei ist $K_{1c}$ der kritische Spannungsintensitätsfaktor des Materials, a die Risslänge und $\sigma_{res}$ die max. Spannungsbelastung des Risses, bevor sich der Mikroriss vergrößert.

Bei der Nachverarbeitung werden typisch spezielle Geometrien (C-Schliff, Flachschliff, kleine Facetten) mit einem speziellen Formwerkzeug erzeugt. Dieser Bearbeitungsschritt ist je nach Eingangsqualität auch noch mehrstufig, wobei mit verschiedenen Werkzeugen unterschiedlicher Körnung nacheinander die Kante abgefahren wird.

Da der genaue Kantenverlauf beim Trennen nicht immer exakt eingehalten werden kann, wird im Allgemeinen auch ein Aufmass vorgehalten. Das Aufmass wird dann bei der Nachbearbeitung der Kante entfernt.

Schließlich müssen bei mehrstufigen Prozessen auch Tiefenschädigungen durch einen ersten Schleifprozess (subsurface damages) durch die nachfolgenden Schritte entfernt werden. Dabei ist das Grobschleifen als erster formgebender Schleifschritt zur Begradigung bzw. (Grob-)Konturerzeugung der Kante vorgesehen, was vor allem bei Trennverfahren wichtig ist, die keine hohe Formtreue erzeugen. Der zweite Schritt - das Feinschleifen - stellt dann die Endkontur mit der dem Prozess entsprechenden Oberflächengüte und damit die Festigkeit her. Dies ist langwierig, da feinere Schleifprozesse auch das Material langsamer abtragen, zur Beseitigung der Tiefenschädigungen aber dennoch eine dickere Schicht abzuschleifen ist. Häufig entsprechen in diesem Zustand die Oberflächengüten nicht den optischen Anforderungen, z.B. hinsichtlich Transparenz oder Rauheit. Reicht die realisierte Kantenqualität nicht aus erfolgt optional ein Polierschritt zur Kantenveredelung, der keine Konturänderungen sondern lediglich die Oberflächengüte verbessert (z.B. verringerte Rauheit, höhere Transparenz, höhere Festigkeit,...). Alle beschriebenen Prozessschritte können im Detail aus mehreren Einzelprozessschritten bestehen.

Die US 2015/165548 A1 beschreibt das Filamentieren eines Glases mit anschließendem Polieren der entstehenden Kante. Im weiteren Prozess entsteht eine Kontur durch zweimaliges Filamentieren der Kantenrandbereiche unter schrägem Winkel. Hier besteht das Problem, dass insbesondere bei nicht vorgespanntem Glas die kleinen perforierten Kantenbereiche (mit dreieckigem Querschnitt) prozesssicher vom bulk-Material abgespalten und splitterfrei entfernt werden müssen. Ein ähnliches Verfahren ist auch in der US 2014/239552 A1 oder in der WO 2015/113026 A2 beschrieben.

Der Erfindung liegt demnach die Aufgabe zugrunde, die Kantenbearbeitung bei Gläsern und Glaskeramiken hinsichtlich des Aufwands, der Genauigkeit und der Produktionskosten zu verbessern. Die Qualität der Kante soll dabei hinsichtlich von Ausmuschelungen und Mikrorisse der Festigkeit und des visuellen Eindrucks mindestens mit den oben beschriebenen Herstellungsverfahren vergleichbar sein.

Diese Aufgabe wird durch den Gegenstand der unabhängigen Ansprüche gelöst. Vorteilhafte Ausgestaltungen und Weiterbildungen sind in den jeweiligen abhängigen Ansprüchen angegeben.

Mit Einsatz eines Ultrakurzpuls-Lasers lässt sich ein Glas derart strukturieren (filamentieren), dass es sich anschließend trennen lässt. Die Trennung ist gegebenenfalls zu unterstützen, mechanisch oder thermomechanisch o.ä. Die dabei entstehende Kante weist hinsichtlich der Festigkeit vergleichbare Werte zu geschliffenen Kanten auf.

Überraschend zeigt sich, dass aufgrund der dabei herstellbaren Genauigkeiten der Kante nachfolgende Prozessschritte wie ein Kantenschleifen wesentlich genauer eingesetzt werden können. Dies bedeutet, dass man nur einen Prozessschritt benötigt, diesen ohne prozesstechnisch bedingtes Aufmaß einsetzen und damit deutlich schnellere Prozessgeschwindigkeiten fahren kann. Insbesondere kann ein Grobschliff aufgrund der hohen Genauigkeit beim Trennen entfallen. Des weiteren hat sich auch gezeigt, dass auf Grund der bereits beim Trennvorgang erzielten hohen Formtreue verglichen mit dem Feinschleifen bei konventioneller mehrstufiger Schleif-Nachbearbeitung deutlich weniger Material beim nachfolgenden Schleifen abgenommen werden muss. Dadurch kann die Prozessgeschwindigkeit um einen Faktor 2, sogar im Allgemeinen um einen Faktor Faktor 2,5 oder 3 erhöht werden.

Insbesondere ist die Kantenqualität hinsichtlich der Festigkeit vergleichbar zu einer konventionell geschliffenen Kante. Weiterhin wurde überraschenderweise festgestellt das sich hinsichtlich der visuellen Erscheinung eine durch Vortrennung mit einem Ultrakurzpuls-Laser hergestellte Kante nicht merklich von einer geschliffenen Kante unterscheidet. Somit können beide Prozesse zur finalen Erzeugung einer Kante kombiniert werden. Damit lassen sich auch geometrisch einfache Werkzeuge einsetzen (z.B. bei Facetten), was die Prozesskette bei gleicher Qualität günstiger macht. Hierbei wird das Schleifvolumen noch einmal reduziert, wodurch sich die Bearbeitungsgeschwindigkeit entsprechend erhöht und der Werkzeug-Verschleiß deutlich reduziert werden können. Des Weiteren lassen sich dadurch Glasartikel mit Genauigkeiten, die durch den Laserprozess vorgegeben werden erzeugen, welche deutlich über den heutigen Genauigkeiten liegen.

Die Erfindung sieht daher allgemein ein flächiges Glas- oder Glaskeramikelement vor, dessen Kante mit einer Kombination aus zwei Verfahren, nämlich Filamentieren und Cleaven, beziehungsweise Trennen einerseits und Kantenschleifen andererseits bearbeitet ist. Diese Verfahren sind also das Einfügen entlang einer Linie nebeneinander liegender filamentförmiger Schädigungen und ein nachfolgendes Auftrennen entlang der Linie unter Bildung einer Kante als erstes Verfahren, sowie als zweites Verfahren eine Bearbeitung der Kante durch Schleifen. Das Schleifen der Kante erfolgt gemäß einer besonders bevorzugten Ausführungsform der Erfindung nicht vollflächig, sondern beschränkt auf einen oder insbesondere beide an die Seitenflächen des Glasoder Glaskeramikelements angrenzenden streifenförmigen Randbereiche der Kantenfläche.

Im Speziellen sieht die Erfindung ein Verfahren zum Herstellen von Glas- oder Glaskeramikelementen aus flächigen Glas- oder Glaskeramikteilen vor, bei welchem

- nebeneinander entlang einer Trennlinie filamentförmige Schädigungen im Inneren des Glas- oder Glaskeramikteils erzeugt werden und
- die Schädigungen durch Laserpulse eines Ultrakurzpulslasers erzeugt werden, wobei das Material des Glas- oder Glaskeramikelements für die Laserpulse zumindest teilweise transparent ist, so dass die Laserstrahlung in das Glas oder die Glaskeramik zur Erzeugung der Schädigungen im Inneren eindringen kann und
- der gepulste Laserstrahl und die Oberfläche des Glas- oder Glaskeramikteils relativ zueinander bewegt werden, so dass sich die Auftreffpunkte der Laserpulse auf der Oberfläche des Glas- oder Glaskeramikelements nebeneinander entlang der Trennlinie aufreihen, und wobei

- nach dem Einfügen der nebeneinander entlang der Trennlinie angeordneten filamentförmigen Schädigungen durch Auftrennen an der Trennlinie das Glas- oder Glaskeramikelement herausgelöst, beziehungsweise aus dem Glas- oder Glaskeramikteil herausgearbeitet wird, und wobei
- die beim Auftrennen gebildeten Kantenfläche des Glas- oder Glaskeramikelements teilweise durch Schleifen bearbeitet wird, so dass die Kantenfläche zumindest einen durch das Einfügen der filamentförmigen Schädigungen und Abtrennen erzeugten streifenförmigen Bereich und einen angrenzenden, durch Schleifen weiter bearbeiteten streifenförmigen Bereich aufweist.

Diese beiden so erzeugten streifenförmigen Bereiche unterscheiden sich unter anderem hinsichtlich ihrer Oberflächenbeschaffenheit, obwohl dieser Unterschied mit bloßem Auge in der Regel nicht wahrnehmbar ist. Die zuvor eingebrachten filamentförmigen Schädigungen sind in der nach dem Herausarbeiten des Glasoder Glaskeramikelements hergestellten Kantenfläche als quer zur Längsrichtung der Kantenfläche verlaufende, parallel zueinander liegende Strukturen feststellbar. Bei dem durch Schleifen weiterbearbeiteten Bereich sind diese Strukturen dagegen zumindest teilweise durch das Abtragen des Materials entfernt.

Ein mit dem oben beschriebenen Verfahren herstellbares flächiges Glas- oder Glaskeramikelement weist demnach zwei gegenüberliegenden Seitenflächen und eine die beiden Seitenflächen verbindenden Kantenfläche auf, wobei die Kantenfläche mindestens einen ersten langgestreckten, streifenförmigen Kantenbereich und mindestens einen zweiten langgestreckten streifenförmigen Kantenbereich der durch ein Schliff gebildet ist, umfasst. Diese Kantenbereiche erstrecken sich in Längsrichtung entlang der Kantenfläche und entlang der Seitenflächen, damit also parallel zur Längsrichtung der Kantenfläche. Der erste Kantenbereich weist langgestreckte, parallel nebeneinander beabstandete filamentförmige Schädigungen auf, deren Längsrichtung quer zu den Seitenflächen und entlang der Oberfläche des ersten Kantenbereichs verläuft. Typischerweise sind die Vorschubgeschwindigkeit und auch die Pulswiederholrate des Lasers bei der Laserbearbeitung im Wesentlichen konstant. Damit geht dann einher, dass die filamentförmigen Schädigungen auch äquidistant, also mit gleichbleibendem Mittenabstand zueinander angeordnet sind.

Besonders geeignet ist die Erfindung für dickere Substrate. Hier besteht der besondere Vorteil, dass der Laser in das Volumen eindringen und dort die vorgesehene Trennfläche präzise durch das Einbringen einer Schädigung festlegen kann. Demgegenüber können mechanische Verfahren im Allgemeinen nur von Außen einwirken, was das Verlaufen der Trennfläche und damit das Einbringen von Ungenauigkeiten in den Abmessungen begünstigt. Allgemein ist die Erfindung für Glas- oder Glaskeramikteile und dementsprechend auch zur Herstellung von Glas- oder Glaskeramikelementen mit einer Dicke im Bereich von 1 bis 20 Millimetern, bevorzugt im Bereich von 2 bis 15 Millimetern besonders, besonders bevorzugt für den Bereich zwischen 3 bis 10 Millimetern geeignet.

Die Erfindung wird nachfolgend genauer unter Bezugnahme auf die Figuren erläutert. In den Figuren bezeichnen gleiche Bezugszeichen jeweils gleiche oder entsprechende Elemente. Es zeigen:

Fig. 1 eine Laserbearbeitungsvorrichtung zum Einfügen filamentförmiger Schädigungen,

Fig. 2 eine optische Anordnung zur Erzeugung eines Bessel-Strahls für die Filamentierung

Fig. 3 eine Laserbearbeitungsvorrichtung zum Herauslösen eines Elements aus einem Glas- oder Glaskeramikteil,

Fig. 4 ein aus einem Glas- oder Glaskeramikteil herausgearbeitetes Element,

Fig. 5 die Weiterbearbeitung des Glas- oder Glaskeramikteils durch Schleifen streifenförmiger Kanten bereiche,

Fig. 6 das fertig bearbeitete Glas- oder Glaskeramikelement,

Fig. 7 im Querschnitt eine Kante mit Facetten, und

Fig. 8 im Querschnitt eine Kante mit einem C-Schliff.

Fig. 9 eine Mikroskop-Aufnahme einer filamentierten und anschließend geschliffenen Kante.

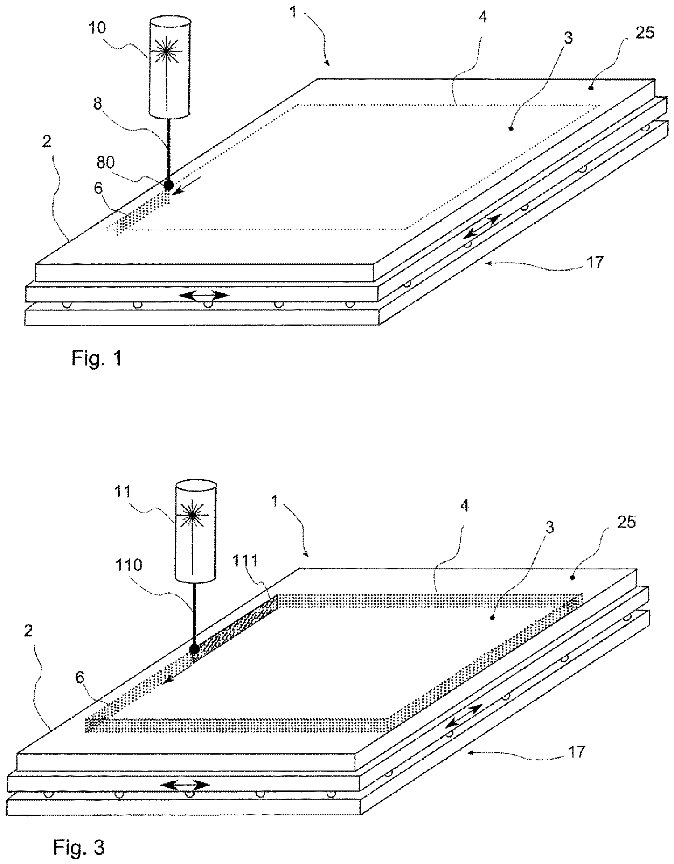

Aus einem flächigen Glas- oder Glaskeramikteil 2 wird für das erfindungsgemäße Verfahren ein Glas- oder Glaskeramikelement 3 mit festgelegten Abmessungen herausgearbeitet. Fig. 1 zeigt ein Ausführungsbeispiel einer Laserbearbeitungsvorrichtung 1 zur Durchführung dieses Verfahrensschritts. Entlang einer vorgesehenen Trennlinie 4 wird eine Vortrennung durch Einfügen langgestreckter oder filamentförmiger Schädigungen vorgenommen. Die gedachte Trennlinie 4 und damit auch der Verlauf der eingefügten Schädigungen 6 zeichnen die Außenkontur des herauszulösenden Glas- oder Glaskeramikelements 3 nach.

Bei dem in Fig. 1 gezeigten Beispiel soll demnach entsprechend dem Verlauf der gedachten Trennlinie aus dem Glas- oder Glaskeramikteil 2 ein rechteckförmiges Element ausgeschnitten werden. Die Trennlinie 4 muss nicht notwendig entlang der gesamten Außenkontur laufen. Beispielsweise wäre es auch denkbar, dass die Außenkontur des Glas- oder Glaskeramikteils 2 und des herauszulösenden Glas- oder Glaskeramikelements 3 teilweise übereinstimmen und entlang dieser Bereiche dann auch keine Vortrennung durchzuführen ist.

Um nebeneinander entlang der Trennlinie 4 filamentförmige Schädigungen 6 im Inneren des Glas- oder Glaskeramikteils 2 zu erzeugen, ist ein Ultrakurzpulslaser 10 als Bestandteil der Vorrichtung 1 vorgesehen. Der Ultrakurzpulslaser 10 gibt Laserpulse 8 ab, welche im jeweiligen Auftreffpunkt 80 auf eine der Seitenflächen 25 des Glas- oder Glaskeramikteils 2 auftreffen und in das Volumen des Teils eindringen. Die Laserpulse 8 werden so auf die Seitenfläche 25 gerichtet, dass die Auftreffpunkte 80 auf der Trennlinie 4 liegen. Mittels einer Vorschubeinrichtung werden dabei der gepulste Laserstrahl und die Oberfläche des Glas- oder Glaskeramikteils 2 relativ zueinander bewegt werden, so dass sich die Auftreffpunkte 80 der Laserpulse 8 auf der Oberfläche 20 des Glas- oder Glaskeramikelements 2 nebeneinander entlang der Trennlinie aufreihen. Bei dem in Fig. 1 gezeigten Beispiel wird das Glas- oder Glaskeramikelement 2 in Richtung des neben dem Auftreffpunkt 80 dargestellten Pfeils entlang der Trennlinie 4 bewegt. Als Vorschubeinrichtung ist in diesem Beispiel ein XY-Tisch 17 vorgesehen, mit welchen das Glas- oder Glaskeramikteil 2 in der Ebene der Seitenfläche 25 bewegt werden kann.

Die Ausbildung einer langgestreckten filamentförmigen Schädigung im Material kann insbesondere durch Selbstfokussierung des hochenergetischen Laserpulses entstehen. Auch kann eine Optik vorgesehen werden, welche im Material einen langgestreckten Fokus erzeugt. Ein Beispiel für eine solche Optik ist ein Axikon. Der Linienfokus weist vorzugsweise eine Länge von 10 mm oder weniger, sowie einen Durchmesser von 10 $\mu$m oder weniger auf. Unabhängig vom Mechanismus der Fokussierung wird die Schädigung des Glas- oder Glaskeramikmaterials insbesondere durch die Erzeugung eines Plasmas durch das hochenergetische Laserlicht verursacht.

Die langgestreckten filamentförmigen Schädigungen 6 werden durch Multiphotonen-Absorption erzeugt, deren Aktivitätsbereiche durch geeignete Optiken eingestellt und geformt werden können. Es kann sich hierbei um eine Filamentierung durch Selbstfokussierung eines Laserstrahls infolge des nichtlinearen Kerr-Effektes im Fokusbereich einer Linse handeln, deren Mechanismus beispielsweise in der WO 2012/006736 A2 beschrieben ist. Alternativ oder zusätzlich kann aber auch durch spezielle Optiken, wie etwa einem Axikon oder Linsen mit sphärischer Aberration ein linienhafter Fokalbereich erzeugt werden, entlang dem die MultiPhotonen-Absorptionsprozesse gezielt hervorgerufen werden können. Solche Optiken sind beispielsweise beschrieben in der FR 2989294 A1, der KR 2014 0072448 A, oder der US 2012/0234807 A1. Die Verwendung einer Optik zur Erzeugung eines Linienfokus hat den Vorteil, nicht auf das fragile Gleichgewicht zwischen Kerr-Fokussierung und Plasma-Defokussierung Rücksicht nehmen zu müssen, so dass in der Praxis gleichmäßigere Schädigungen des Materials erzeugt werden können. Auch lässt sich über eine Optik die Intensitätsverteilung im Material und damit auch die Länge der linienhaften Schädigungen gezielt einstellen.

Allgemein, unabhängig von der Art und Weise des Vorschubs wird es bevorzugt, dass die Wiederholrate des Ultrakurzpulslasers 10 und die Vorschubgeschwindigkeit bei der Bewegung des gepulsten Laserstrahls und der Oberfläche des Glas- oder Glaskeramikteils 2 relativ zueinander so eingestellt werden, dass die nebeneinander angeordneten filamentförmigen Schädigungen einen Mittenabstand im Bereich von 1 bis 15 Mikrometer, vorzugsweise 2 bis 10 Mikrometer aufweisen. Dieser Abstand stellt bei schneller Prozessgeschwindigkeit sicher, dass sich das Glas- oder Glaskeramikelement 3 noch einfach und sicher herausarbeiten lässt.

Besonders vorteilhaft für die Erzeugung langer filamentförmiger Schädigungen ist allgemein ein Betrieb des Ultrakurzpulslasers 10 im Burst-Modus. Bei diesem Betriebsmodus werden die Laserpulse 8 nicht als Einzelpuls, sondern in Form von Pulspaketen abgegeben. Diese Pulspakete werden als Bursts bezeichnet. Demgemäß ist in Weiterbildung der Erfindung ein Betrieb des Lasers 10 in Form einer zeitlich nacheinander folgenden Abgabe von Laserpulsen in Form von Bursts, beziehungsweise Pulspaketen vorgesehen, wobei vorzugsweise jeder dieser Bursts jeweils eine der filamentförmigen Schädigungen 6 erzeugt.

Ein solches Pulspaket weist im Allgemeinen eine etwas größere Energie auf, als ein Einzelpuls im üblichen Single-Shot-Betrieb. Die Pulse eines Bursts selbst beinhalten aber deutlich weniger Energie als ein Einzelpuls. Weiterhin ist typisch, dass die Pulsenergien der Pulse innerhalb eines Bursts abnehmen. Bei bestimmten Lasern ist die Energieverteilung der Pulse innerhalb des Bursts einstellbar. Der Burst-Modus lässt sich also dahingehend charakterisieren, dass der Laser Pulspakete abgibt, wobei der zeitliche Abstand der Pulse innerhalb eines Pulspakets kleiner ist, als der zeitliche Abstand zwischen zwei Pulspaketen, und wobei die Pulsenergie der Pulse innerhalb eines Pulspakets von Puls zu Puls absinkt.

Eine geeignete Laserquelle gemäß der vorliegenden Erfindung ist ein Neodym-dotierter Yttrium-Aluminium-Granat-Laser mit einer Wellenlänge von vorzugsweise $1064 \pm 5$ Nanometern, möglich sind aber auch die Wellenlängen $532 \pm 5$ bzw. $355 \pm 5$ Nanometer. Die Laserquelle arbeitet vorzugsweise mit einer Repetitionsrate, welche zwischen 5 kHz und 200 kHz, bevorzugt zwischen 10 kHz und 150 kHz und ganz besonders bevorzugt zwischen 30 kHz und 110 kHz. Die Scangeschwindigkeit kann vorzugsweise so gewählt werden, dass abhängig von der Repetitionsrate der Abstand benachbarter filamentförmiger Schädigungen im Bereich von 2 Mikrometer bis 10 Mikrometer liegt.

Besonders vorteilhaft ist gemäß einer Ausführungsform der Erfindung allgemein auch ein Betriebsmodus, bei welchem die Repetitionsrate der Laserpulse in Gestalt von Einzelpulsen oder Bursts abhängig von der Relativgeschwindigkeit zwischen Laser und Glas- oder Glaskeramikteil angepasst wird, um insbesondere einen möglichst gleichbleibenden Abstand auch bei unterschiedlichen Geschwindigkeiten zu erreichen.. Die Anpassung ist also insbesondere dergestalt, dass bei einer höheren Vorschubgeschwindigkeit auch eine höhere Repititionsrate eingestellt wird.

Dabei ist gemäß einer Weiterbildung dieser Ausführungsform vorgesehen, dass gerade Strecken mit höheren Repititionsraten (und Geschwindigkeiten) abgefahren werden, als z.B. gekrümmte Streckenabschnitte. Dadurch lassen sich auch Komplexe Geometrien mit hohen Genauigkeiten, insbesondere aber auch mit hohen mittleren Geschwindigkeiten realisieren.

Dabei liegt die geeignete Pulsdauer eines Laserimpulses in einem Bereich von weniger als 100 Pikosekunden, bevorzugt bei weniger als 20 Pikosekunden. Die Pulsdauer kann auch bei weniger als 1 Pikosekunde liegen. Die typische Leistung der Laserquelle liegt dabei besonders günstig in einem Bereich von 40 bis 200 Watt. Um die filamentförmigen Schädigungen zu erzielen, wird gemäß einer vorteilhaften Weiterbildung der Erfindung eine Pulsenergie im Burst von mehr als 200 Mikrojoule eingesetzt, ferner vorteilhaft eine gesamte Burstenergie von mehr als 500 Mikrojoule.

Bevorzugt wird ein Laser 10 mit einer Leistung in einem Bereich von etwa 10 bis 200 Watt verwendet.

Die im Glas- oder Glaskeramikteil 3 deponierte Laser-Energie beträgt > 300 $\mu$J, bevorzugt >400 $\mu$J und ganz besonders bevorzugt > 500 $\mu$J je Laserpuls, insbesondere bei Laserpulsen in Gestalt von Bursts.

Im Falle eines Betriebs des Lasers 10 im Burst-Modus ist die Repetitionsrate die Wiederholrate der Abgabe von Bursts. Die Pulsdauer ist im Wesentlichen unabhängig davon, ob ein Laser im Einzelpulsbetrieb oder im Burst-Mode betrieben wird. Die Pulse innerhalb eines Bursts weisen typischerweise eine ähnliche Pulslänge auf, wie ein Puls im Einzelpulsbetrieb.

Die filamentförmigen Schädigungen 6 erstrecken sich der Lichtausbreitung folgend von der Oberfläche aus in das Material hinein, also in Richtung auf die gegenüberliegende Seitenfläche zu. Ist das Einfügen dieser Schädigungen 6 abgeschlossen, so dass die Schädigungen gewissermaßen einen unter der vorgesehenen Trennlinie 74 verlaufenden Vorhang aus nebeneinander angeordneten Filamenten bilden, beziehungsweise auf einer im Volumen liegenden Fläche liegen, kann anschließend das herzustellende Glas- oder Glaskeramikelement 3 herausgearbeitet werden.

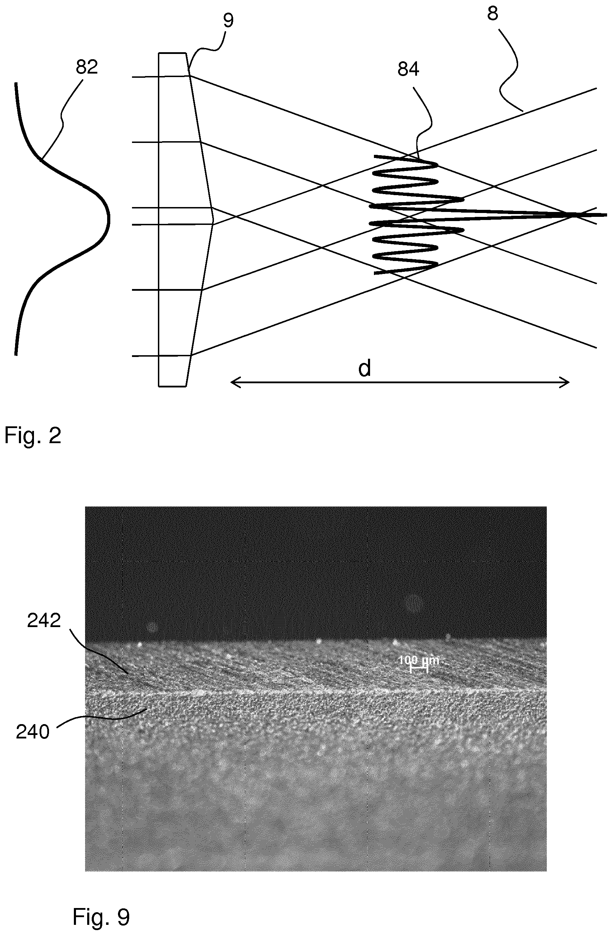

Fig. 2 zeigt schematisch den Strahlengang des Laserpulses 8 durch ein optisches Element 9 zur Erzeugung eines Bessel-Strahls. Mit dem Bessel-Strahl wird ein Linienfokus der Länge d erreicht, entlang welchem eine im Wesentlichen gleichbleibende Lichtintensität im Bereich der optischen Achse vorliegt. Der Strahlengang läuft in der Darstellung der Fig. 2 von links nach rechts.

Mit dem Bezugzeichen 82 ist das räumliche Intensitätsprofil des Laserpulses 8 vor Auftreffen auf das optische Element bezeichnet. Der Laserpuls 8 hat typischerweise ein Gauß-förmiges Intensitätsprofil. Nach dem Passie-ren des optischen Elements wird ein räumliches Intensitätsprofil 84 in Gestalt eines Bessel-Strahls mit stark überhöhter Intensität auf der optischen Achse ausgebildet. Dieses Intensitätsprofil bleibt entlang der Strecke d im Wesentlichen erhalten. Dementsprechend bewirkt das optischen Element 9 eine Fokussierung auf einen Linienfokus. Um eine derartige Fokussierung zu erreichen, ist insbesondere ein Axikon als optisches Element 9 geeignet.

Allgemein, ohne Beschränkung auf die beschriebenen Ausführungsbeispiele kann das Auftrennen an der Trennlinie 4 für das Herausarbeiten des Glas- oder Glaskeramikelements 3 durch lokales Erwärmen des Glas- oder Glaskeramikteils (2) entlang der Trennlinie erfolgen oder zumindest unterstützt werden. Besonders geeignet ist dazu das Erwärmen mittels eines Laserstrahls. Diesen Schritt des Auftrennens mittels eines Lasers ist in Fig. 3 dargestellt. Die lokale Erwärmung wird durchgeführt, indem der Laserstrahl 110 eines $CO_2$-La-sers wiederum entlang der Trennlinie 4 über die Seitenfläche 25 des Glas- oder Glaskeramikteils 2 geführt wird. Es bietet sich an, den gleichen Bewegungsmechanismus wie für den Schritt des Einfügens der filamentförmigen Schädigungen zu verwenden. Demgemäß wird bei dem in Fig. 3 gezeigten Beispiel entsprechend zu der Anordnung aus Fig. 1 ebenfalls der Laser ortsfest gehalten und das Glas- oder Glaskeramikteil 2 mittels des XY-Tisches 17 bewegt. Dieser Bewegungsmechanismus ist selbstverständlich nur beispielhaft. Wesentlich ist Relativbewegung zwischen Auftreffpunkt des Laserstrahls und Glas- oder Glaskeramikteil 2. Durch die lokale Erwärmung werden mechanische Spannungen erzeugt, welche dazu führen, dass sich ein entlang der Fläche, in welcher die filamentförmigen Schädigungen 6 liegen, ein Riss 111 ausbildet und sich das herauszuarbeitende Glas- oder Glaskeramikteil 3 vom umgebenden Material trennt.

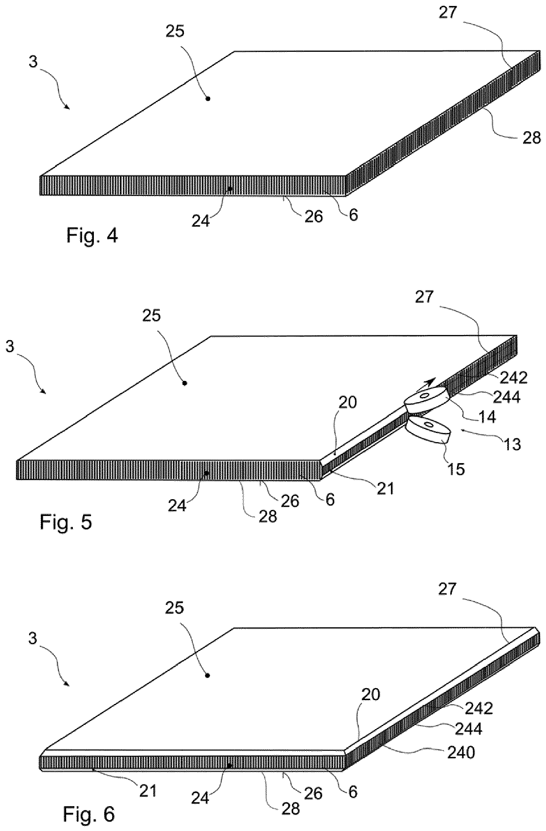

Fig. 4 zeigt das herausgearbeitete flächige Glas- oder Glaskeramikteil 3. Das Glas- oder Glaskeramikelement 3 weist zwei gegenüberliegende Kantenflächen 25, 26, sowie eine umlaufende Kantenfläche 24 auf. Die Dicke des Elements 3 liegt vorzugsweise im Bereich von 1 bis 20 Millimetern, besonders bevorzugt im Bereich von 5 bis 15 Millimetern. In der Kantenfläche sind noch die Laserstrukturen, beispielsweise in Form von filamentförmigen Schädigungen 6, erkennbar. Diese verlaufen in ihrer Längsrichtung in Richtung von der einen Seitenfläche 25 zur gegenüberliegenden Seitenfläche 26. Ist die Einstrahlung der Laserpulse 8 senkrecht zur Seitenfläche 25, so liegt die Längsrichtung der fila-mentförmigen Schädigungen dementsprechend in Rich-tung der Oberflächennormale der Seitenfläche 25.

Gegenüber konventionellen Trennverfahren weist dieses Verfahren den Vorteil einer hohen Genauigkeit auf. So wird bei einer Dicke des Glas- oder Glaskeramikteils von 4 mm bei konventionellem Ritzbrechen ein Aufmass von beispielsweise 0,6 mm eingehalten. Die vorgesehenen genauen Abmessungen werden dann durch Schleifen bis auf das richtige Maß hergestellt. Dabei wird eine Zustellung von 1 - 2 mm, beispielsweise 1,3 mm je Seite für das Abschleifen erforderlich. Mit zunehmender Dicke des Glas- oder Glaskeramikteils steigen die Ungenauigkeiten beim Zuschneiden weiter an. Entsprechend ist ein größeres Aufmass zu berücksich-tigen.

Demgegenüber können beim erfindungsgemä-ßen Verfahren allenfalls beim Aufspannen des Glas-oder Glaskeramikteils Ungenauigkeiten entstehen, wenn die Kontur des herzustellenden Elements nicht in einem durchgehenden Bearbeitungsschritt mit dem Ultrakurzpulslaser abfahrbar ist. Solche Ungenauigkeiten bewegen sich typischerweise im Bereich von kleiner als 0,2 mm, bevorzugt 0,1 mm besonders bevorzugt kleiner 0,05 mm.

Erfindungsgemäß ist aber die Kantenbearbeitung mit dem Herausarbeiten des Glas- oder Glaskeramikteils 3 noch nicht abgeschlossen. Es erfolgt noch eine mechanische Feinbearbeitung. Diese ist aber vorzugsweise derart, dass die äußeren Abmessungen nicht mehr verkleinert werden. Jedenfalls wird die beim Auftrennen gebildeten Kantenfläche 24 des Glas- oder Glaskeramikelements 3 teilweise durch Schleifen so bearbeitet, dass die Kantenfläche 24 zumindest einen durch das Einfügen der filamentförmigen Schädigungen und Abtrennen erzeugten streifenförmigen Bereich und einen angrenzenden, durch Schleifen weiter bearbeiteten streifenförmigen Bereich aufweist.

Fig. 5 zeigt das Glas- oder Glaskeramikelement 3 bei der vorstehend erläuterten weiteren Kantenbearbeitung. Die Kanten 27, 28 am Übergang zwischen der Kantenfläche 24 zu den Seitenflächen 25, 26 sind noch scharfkantig und entsprechend empfindlich. Hier wird durch Kantenschleifen das Profil der Kantenfläche verändert, um diese stoßunempfindlicher zu machen. Dazu werden an die Seitenflächen 25, 26 angrenzende streifenförmige Bereiche 242, 244 durch Schleifen bearbeitet, so dass die Kanten 27, 28 abgerundet werden. Bei dem in Fig. 5 gezeigten Beispiel wird das Schleifen der streifenförmigen Bereiche 242, 244 der Kantenfläche 24 mit einer Schleifvorrichtung 13 durchgeführt, welche zwei rotierende Schleifköpfe 14, 15 aufweist. Die Schleifvorrichtung 13 wird entlang des eingezeichneten Pfeils an der Kantenfläche 24 entlangbewegt, so dass die Bereiche 242, 244 einschließlich der Kanten 27, 28 schräg angeschliffen werden.

Allgemein kann durch das Schleifen eine Facette erzeugt werden, welche einen Übergang von der Kantenfläche 24 zur angrenzenden Seitenfläche 25, 26 bildet. Bevorzugt wird, wie dies auch bei dem in Fig. 5 gezeigten Beispiel der Fall ist, zumindest eine Facette 20, 21 an der Kante jeder der Seitenflächen 25, 26 eingeschliffen.

Fig. 6 zeigt das fertig bearbeitete Glas- oder Glaskeramikelement 3 mit beidseitigen Facetten 242, 244. Die Kantenfläche 24 des Glas- oder Glaskeramikelements 3 weist nun aufgrund der oben beschriebenen Herstellung mindestens einen ersten langgestreckten, streifenförmigen Kantenbereich 240 und mindestens einen zweiten langgestreckten streifenförmigen Kantenbereich, hier zwei Kantenbereiche 242, 244 auf, die durch ein Schliff gebildet sind. Diese Kantenbereiche 240, 242, 244 erstrecken sich in Längsrichtung entlang der Längsrichtung der Kantenfläche 24. Der erste Kantenbereich 240 weist dabei die durch die Laserbearbeitung eingefügten langgestreckten, parallel nebeneinander äquidistant beabstandeten filamentförmigen Schädigungen 6 auf. Deren Längsrichtung verläuft quer, vorzugsweise senkrecht zu den Seitenflächen 25, 26 und entlang der Oberfläche des ersten Kantenbereichs 240. Da das Glas- oder Glaskeramikteil 3 an den filamentförmigen Schädigungen 6 abgetrennt wurde, können diese in der Oberfläche des ersten Kantenbereichs 240 insbesondere als grabenförmige, langgestreckte Vertiefungen vorliegen.

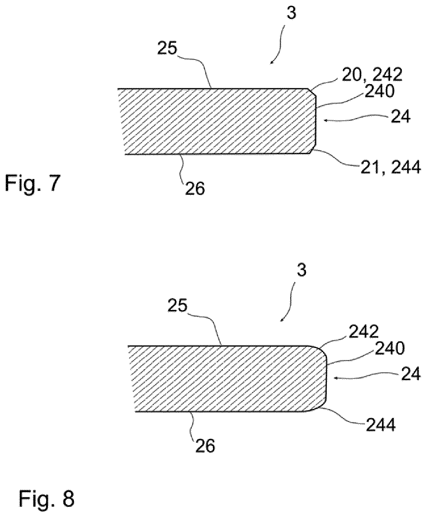

Fig. 7 zeigt zur Verdeutlichung der vorstehend beschriebenen Ausführungsform die Querschnittsform einer wie vorstehend beschrieben bearbeitete Kante eines Glas- oder Glaskeramikelements 3 mit einem Facettenschliff. Die Kantenfläche 24 wird durch einen ersten Kantenbereich 240 gebildet, wobei der Übergang zu den Seitenflächen 25, 26 jeweils durch einen als schmale Facette 20, 21 ausgebildeten zweiten Kantenbereich 242, 244, gebildet wird. Die Neigung der zweiten Kantenbereiche 242, 244 liegt jeweils zwischen der Neigung des ersten Kantenbereichs 240 und der angrenzenden Seitenfläche 25, beziehungsweise 26. Entsprechendes gilt dann auch für die Richtungen der Normalen. Demgemäß bilden hier die zweiten Kantenbereiche 242, 244 jeweils eine Facette 20, 21, deren Normalenrichtung zwischen der Normale des ersten Kantenbereichs 240 und der Normale der an die Facette angrenzenden Seitenfläche 25, 26 liegt.

Fig. 8 zeigt eine weitere Ausführungsform der Erfindung. Bei dieser Ausführungsform wird durch den ersten Kantenbereich 240 und die zweiten Kantenbereiche 242, 244 eine C-Form der Kantenfläche erhalten. Bei dem flächigen Glas- oder Glaskeramikelement 3 gemäß dieser Ausführungsform der Erfindung weist die Kantenfläche 24 im Speziellen zumindest bereichsweise ein C-Profil auf, bei welchem zwischen zwei gebogen verlaufenden zweiten Kantenbereichen 242, 244 der erste Kantenbereich 240 verläuft.

Wie bei dem in Fig. 8 gezeigten Beispiel rahmen auch hier die zweiten Kantenbereiche 242, 244 den ersten Kantenbereich 240 ein und bilden den Übergang vom ersten Kantenbereich 240 zu den Seitenflächen 25, beziehungsweise 26. Bedingt durch die geradlinige Lichtfortpflanzung verläuft wie auch bei den anderen Ausführungsformen der Erfindung der erste Kantenbereich 240 im Querschnitt geradlinig. Durch die Biegung der Oberfläche der zweiten Kantenbereiche 242, 244 nähert sich die Neigung der Oberfläche sowohl zum ersten Kantenbereich hin, als auch zur Seitenfläche hin der Neigung dieser angrenzenden Oberflächenbereiche an. Es wird dabei aber nicht ausgeschlossen, dass noch Kanten an den Übergängen vorhanden sind. Der C-Schliff ist besonders unempfindlich gegenüber Beschädigungen der Kante. Es ist dem Fachmann ersichtlich, dass die Ausführungsbeispiele gemäß den Fig. 7 und Fig. 8 auch miteinander kombiniert werden können. Zum einen kann die umlaufende Kante Abschnitte mit einem C-Schliff und Abschnitte mit Facetten aufweisen. Auch kann an einer Seitenfläche eine Facette gemäß Fig. 7, an der gegenüberliegenden Seite ein abgerundeter Kantenbereich eines C-Schliffs vorgesehen werden. Schließlich können auch an beiden Seitenflächen zusätzlich zu den abgerundeten Kantenbereichen auch Facetten vorhanden sein.

Nachfolgend werden das erfindungsgemäße Verfahren mit einem konventionellen Verfahren zum Zuschnitt eines Glas- oder Glaskeramikteils 3 verglichen. Als Substrat diente in beiden Beispielen eine Kalk-Natron-Glasscheibe mit einer Dicke von 8 mm. Beim konventionellen Prozessieren wurde mit einem Diamant-Ritzrad geritzt und dann durch Brechen das Glaselement herausgearbeitet. Das Einfügen des C-Schliffs erfolgte in zwei Schritten, mit einer Körnung D121 und einem Vorschub von 8m/min, dann mit einer Körnung D76 und einem Vorschub von 5 m/min.

Erfindungsgemäß wurde eine Glasscheibe mittels eines Pikosekundenlasers mit 1064nm Wellenlänge, einer Wiederholrate von 100 kHz und Laserpulsen aus 4 Bursts perforiert. Der Perforationsabstand, also der Mittenabstand zwischen benachbarten filamentförmigen Schädigungen betrug 5 $\mu$m. Das Auftrennen erfolgte, indem die Trennlinie mit dem Laserstrahl eines $CO_2$-Lasers nachgefahren wurde. Der Laserspot hatte einen Durchmesser von 8 mm, die Laserleistung betrug 260 W. Die gebogenen Kantenbereiche des C-Schliffs wurden durch einmaliges Schleifen mit einer Körnung D76 und einem Vorschub von 12,5 m/min eingefügt. Da der Verlauf der Kante genauer festgelegt ist, als beim Ritzbrechen und nur die gebogenen Übergangsbereiche von der Kante zu den Seitenflächen hergestellt werden müssen, reicht gegenüber dem konventionellen Bearbeitungsverfahren ein einzelner Schleifschritt. Zudem kann das Schleifen mit einer höheren Vorschubgeschwindigkeit vorgenommen werden. Allgemein, ohne Beschränkung auf die speziellen Ausführungsbeispiele, wie sie die Figuren zeigen, sind für das erfindungsgemäße Verfahren Vorschubgeschwindigkeiten beim Schleifen, also in der Relativbewegung zwischen Schleifvorrichtung 13 und Oberfläche des Glas- oder Glaskeramikteils 2 im Bereich von 5 Metern pro Minute bis 40 Meter pro Minute, besonders bevorzugt im Bereich bis 20 Meter pro Minute günstig.

Fig. 9 zeigt eine Mikroskop-Aufnahme einer erfindungsgemäß hergestellten, also durch Filamentieren vorgetrennten und anschließend geschliffenen Kante. In dieser Aufnahme sind im Bereich 242 diagonal verlaufende Schleifspuren zu erkennen, welche im durch Filamentieren hergestellten streifenförmigen Kantenbereich 240 fehlen. Die Mikroskopaufnahme zeigt aber, dass die Rauigkeiten der beiden Bereiche ähnlich sind. Optisch und haptisch erscheinen die unterschiedlich bearbeiteten Kantenbereiche daher im Wesentlichen ununterscheidbar. Die filamentförmigen Schädigungen sind bei der Vergrößerung der in Fig. 9 gezeigten Aufnahmen nicht erkennbar.

Bezuqszeichenliste

| | |
|---|---|
| 1 | Laserbearbeitungsvorrichtung |
| 2 | Glas- oder Glaskeramikteil |
| 3 | aus Glas- oder Glaskeramikteil 2 herausgearbeitetes Glas- oder Glaskeramikelement |
| 4 | Trennlinie |
| 6 | filamentförmige Schädigung |
| 8 | Laserpuls |
| 9 | optisches Element |
| 10 | Ultrakurzpulslaser |
| 11 | $CO_2$-Laser |
| 13 | Schleifvorrichtung |
| 14, 15 | Schleifköpfe |
| 17 | XY-Tisch |
| 20, 21 | Facette |
| 24 | Kantenfläche |
| 25, 26 | Seitenflächen |
| 27, 28 | Kante |
| 80 | Auftreffpunkt eines Laserpulses 8 auf Oberfläche 20 |
| 82 | räumliches Intensitätsprofil des Laserpulses 8 vor Fokussierung |
| 84 | räumliches Intensitätsprofil des Laserpulses nach Fokussierung |
| 110 | Laserstrahl von 10 |
| 111 | Riss |
| 240 | streifenförmiger Bereich, durch Filamentieren bearbeitet |
| 242, 244 | streifenförmiger Bereich, durch Schleifen nachbearbeitet |

**Patentansprüche**

1. Verfahren zum Herstellen von Glas- oder Glaskeramikelementen (3) aus flächigen Glas- oder Glaskeramikteilen (2) mit hoher Genauigkeit und reduziertem Schleifvolumen, bei welchem

    - nebeneinander entlang einer Trennlinie (4) filamentförmige Schädigungen (6) im Inneren des Glas- oder Glaskeramikteils (2) erzeugt werden,

    - die Schädigungen durch Laserpulse (8) eines Ultrakurzpulslasers (10) erzeugt werden, wobei das Material des Glas- oder Glaskeramikelements (2) für die Laserpulse (8) zumindest teilweise transparent ist, so dass die Laserstrahlung in das Glas oder die Glaskeramik zur Erzeugung der Schädigungen im Inneren eindringen kann und

    - der gepulste Laserstrahl und die Oberfläche des Glas- oder Glaskeramikteils (2) relativ zueinander bewegt werden, so dass sich die Auftreffpunkte (80) der Laserpulse (8) auf der Oberfläche (20) des Glas- oder Glaskeramikelements (2) nebeneinander entlang der Trennlinie aufreihen, und wobei

    - nach dem Einfügen der nebeneinander entlang der Trennlinie (4) angeordneten filamentförmigen Schädigungen (6) durch Auftrennen an der Trennlinie (4) das Glas- oder Glaskeramikelement (3) herausgearbeitet wird, und wobei

    - die beim Auftrennen gebildeten Kantenfläche (24) des Glas- oder Glaskeramikelements (3) teilweise durch Schleifen bearbeitet wird, so dass die Kantenfläche (24) zumindest einen durch das Einfügen der filamentförmigen Schädigungen und Abtrennen erzeugten streifenförmigen Bereich (240) mit langgestreckten, parallel nebeneinander verlaufenden filamentförmigen Schädigungen, deren Längsrichtung quer zu den Seitenflächen (25, 26) verlaufen, und einen angrenzenden, durch Schleifen weiter bearbeiteten streifenförmigen Bereich (242) aufweist.

2. Verfahren gemäß dem vorstehenden Anspruch, **dadurch gekennzeichnet, dass** an die Seitenflächen (25, 26) angrenzende streifenförmige Bereiche (242, 244) durch Schleifen bearbeitet werden.

3. Verfahren gemäß einem der vorstehenden Ansprüche, **dadurch gekennzeichnet, dass** durch das Schleifen eine Facette erzeugt wird, welche einen Übergang von der Kantenfläche (24) zur angrenzenden Seitenfläche (25, 26) bildet.

4. Verfahren gemäß einem der vorstehenden Ansprüche, **dadurch gekennzeichnet, dass** das Auftrennen an der Trennlinie (4) durch lokales Erwärmen des Glas- oder Glaskeramikteils (2) entlang der Trennlinie erfolgt oder unterstützt wird, vorzugsweise mittels eines Laserstrahls.

5. Verfahren gemäß einem der vorstehenden Ansprüche, **dadurch gekennzeichnet, dass** die Wiederholrate des Ultrakurzpulslasers (10) und die Vorschubgeschwindigkeit bei der Bewegung des gepulsten Laserstrahls und der Oberfläche des Glas- oder Glaskeramikteils (2) relativ zueinander so eingestellt werden, dass die nebeneinander angeordneten filamentförmigen Schädigungen einen Mittenabstand im Bereich von 1 bis 15 Mikrometer, vorzugsweise 2 bis 10 Mikrometer aufweisen.

6. Verfahren gemäß einem der vorstehenden Ansprüche, **dadurch gekennzeichnet, dass** eine Vorschubgeschwindigkeit beim Schleifen in der Relativbewegung zwischen Schleifvorrichtung (13) und Oberfläche des Glas- oder Glaskeramikteils 2 im Bereich von 5 Metern pro Minute bis 40 Meter pro Minute, besonders bevorzugt im Bereich bis 20 Meter pro Minute eingestellt wird.

7. Verfahren gemäß einem der vorstehenden Ansprüche, bei welchem der Ultrakurzpulslaser (10) im Burst-Modus betrieben wird, bei welchem Laserpulse (8) in Form von Pulspaketen abgegeben werden.

8. Verfahren gemäß einem der vorstehenden Ansprüche, **dadurch gekennzeichnet, dass** die Repetitionsrate der Laserpulse (8) abhängig von der Relativgeschwindigkeit zwischen Laser (10) und Glas- oder Glaskeramikteil (2) angepasst wird.

9. Verfahren gemäß einem der vorstehenden Ansprüche, **dadurch gekennzeichnet, dass** im Glas- oder Glaskeramikteil (2) mehr als 300 μJ, bevorzugt mehr als 400 μJ, ganz besonders bevorzugt mehr als 500 μJ je Laserpuls (8) deponiert wird.

10. Flächiges Glas- oder Glaskeramikelement (3) mit zwei gegenüberliegenden Seitenflächen (25, 26) und eine die beiden Seitenflächen (25, 26) verbindenden Kantenfläche (24), wobei die Kantenfläche (24) mindestens einen ersten langgestreckten, streifenförmigen Kantenbereich (240) und mindestens einen zweiten langgestreckten streifenförmigen Kantenbereich (242, 244), der durch einen Schliff gebildet ist, umfasst, wobei sich diese Kantenbereiche in Längsrichtung entlang der Kantenfläche (24) und entlang der Seitenflächen (25, 26) erstrecken, wobei der erste Kantenbereich (240) langgestreckte, parallel nebeneinander insbesondere äquidistant beabstandete filamentförmige Schädigungen (6) aufweist, deren Längsrichtung quer zu den Seitenflächen (25, 26) und entlang der Oberfläche des ersten Kantenbereichs (240) verläuft.

11. Flächiges Glas- oder Glaskeramikelement (3) gemäß dem vorstehenden Anspruch, **dadurch gekennzeichnet, dass** die Kantenfläche (24) zwei zweite Kantenbereiche (242, 244) aufweist, von denen jede an eine der Seitenflächen (25, 26) angrenzt und zwischen denen sich der erste Kantenbereich (240) erstreckt.

12. Flächiges Glas- oder Glaskeramikelement (3) gemäß einem der zwei vorstehenden Ansprüche, **gekennzeichnet durch** eine Dicke im Bereich von 1 bis 20 Millimetern, besonders bevorzugt im Bereich von 2 bis 15 Millimetern, besonders besonders bevorzugt im Bereich von 3-10mm.

13. Flächiges Glas- oder Glaskeramikelement (3) gemäß einem der drei vorstehenden Ansprüche, **dadurch gekennzeichnet, dass** die Kantenfläche (24) zumindest bereichsweise ein C-Profil aufweist, bei welchem zwischen zwei gebogen verlaufenden zweiten Kantenbereichen (242, 244) der erste Kantenbereich (240) verläuft.

14. Flächiges Glas- oder Glaskeramikelement (3) gemäß einem der drei vorstehenden Ansprüche, **dadurch gekennzeichnet, dass** die zweiten Kantenbereiche (242, 244) jeweils eine Facette (20, 21) bilden, deren Normalenrichtung zwischen der Normale des ersten Kantenbereichs (240) und der Normale der an die Facette angrenzenden Seitenfläche (25, 26) liegt.

**Claims**

1. A method for producing glass or glass ceramic elements (3) from sheet-like glass or glass ceramic parts (2) with high accuracy and reduced grinding volume, wherein

- filamentary defects (6) are generated in the interior of the glass or glass ceramic part (2) adjacent to one another along a separation line (4);
- the defects are generated by laser pulses (8) of an ultra-short pulse laser (10), wherein the material of the glass or glass ceramic element (2) is at least partially transparent for the laser pulses (8), so that the laser radiation can penetrate into the glass or the glass ceramic for generating the defects in the interior thereof; and
- the pulsed laser beam and the surface of the glass or glass ceramic part (2) are moved relative to each other, so that the points of incidence (80) of the laser pulses (8) on the surface (20) of the glass or glass ceramic element (2) line up adjacent to one another along the separation line; and wherein
- once the filamentary defects (6) have been introduced adjacent to one another along the separation line (4), the glass or glass ceramic element (3) is worked out by severing along the separation line (4); and wherein
- the edge surface (24) of the glass or glass ceramic element (3) formed by the severing is partially processed by grinding, so that the edge surface (24) comprises at least one strip-shaped region (240) generated by the introducing of the filamentary defects and the severing, which has elongated juxtaposed parallel filamentary defects with a longitudinal extension transversely to the faces (25, 26), and an adjacent strip-shaped region (242) that has been further processed by grinding.

2. The method according to the preceding claim, **characterised in that** strip-shaped regions (242, 244) adjoining the faces (25, 26) are processed by grinding.

3. The method according to any one of the preceding claims, **characterised in that** the grinding produces a facet which defines a transition from the edge surface (24) to the adjoining face (25, 26).

4. The method according to any one of the preceding claims, **characterised in that** the severing along the separation line (4) is achieved or supported by local heating of the glass or glass ceramic part (2) along the separation line, preferably by using a laser beam.

5. The method according to any one of the preceding claims, **characterised in that** the repetition rate of the ultra-short pulse laser (10) and the advancement rate in the movement of the pulsed laser beam and the surface of the glass or glass ceramic part (2) relative to each other are adjusted such that the filamentary defects disposed adjacent to one another have a centre-to-centre distance in the range from 1 to 15 micrometres, preferably 2 to 10 micrometres.

6. The method according to any one of the preceding claims, **characterised in that** an advancement rate during grinding in the relative movement between the grinding device (13) and the surface of the glass or glass ceramic part (2) is set to be in the range from 5 meters per minute to 40 meters per minute, most preferably in the range of up to 20 meters per minute.

7. The method according to any one of the preceding claims, wherein the ultra-short pulse laser (10) is operated in the burst mode in which laser pulses (8) are emitted in the form of pulse packets.

8. The method according to any one of the preceding claims, **characterised in that** the repetition rate of the laser pulses (8) is adjusted as a function of the relative velocity between the laser (10) and the glass or glass ceramic part (2).

9. The method according to any one of the preceding claims, **characterised in that**, more than 300 $\mu$J, preferably more than 400 $\mu$J, most preferably more than 500 $\mu$J per laser pulse (8) is deposited in the glass or glass ceramic part (2).

10. A sheet-like glass or glass ceramic element (3) having two opposite faces (25, 26) and an edge surface (24) connecting the two faces (25, 26), wherein the edge surface (24) comprises at least one first elongated strip-shaped edge region (240) and at least one second elongated strip-shaped edge region (242, 244) formed by a grinding process, wherein said edge regions extend longitudinally along the edge surface (24) and along the faces (25, 26), wherein the first edge region (240) has elongated filamentary defects (6) juxtaposed parallel to one another in particular in an equidistantly spaced manner and with a longitudinal extension extending transversely to the faces (25, 26) and along the surface of the first edge region (240).

11. The sheet-like glass or glass ceramic element (3) according to the preceding claim, **characterised in that** the edge surface (24) has two second edge regions (242, 244), each one adjoining a respective one of the faces (25, 26), and has the first edge region (240) extending therebetween.

12. The sheet-like glass or glass ceramic element (3) according to any one of the two preceding claims, **characterised by** a thickness in the range from 1 to 20 millimeters, more preferably in the range from 2 to 15 millimeters, most preferably in the range from 3 to 10 mm.

13. The sheet-like glass or glass ceramic element (3) according to any one of the three preceding claims, **characterised in that** the edge surface (24) has a C-profile at least in sections thereof, with the first edge region (240) extending between two curved second edge regions (242, 244).

14. The sheet-like glass or glass ceramic element (3) according to any one of the three preceding claims, **characterised in that** the second edge regions (242, 244) each define a facet (20, 21) that has a normal direction between the normal of the first edge region (240) and the normal of the face (25, 26) adjoining the facet.

## Revendications

1. Procédé de fabrication d'éléments en verre ou vitrocéramique (3) à partir de pièces en verre ou vitrocéramique (2), avec une grande précision et un volume de rodage réduit, selon lequel

   - on crée, à l'intérieur de la pièce en verre ou vitrocéramique (2), des détériorations (6) en forme de filaments, les unes à côté des autres, le long d'une ligne de séparation (4),
   - les détériorations sont créées par des impulsions laser (8) d'un laser à impulsions ultracourtes (10), sachant que le matériau de l'élément en verre ou vitrocéramique (2) est au moins partiellement transparent aux impulsions laser (8), de sorte que le rayonnement laser peut pénétrer dans le verre ou la vitrocéramique pour créer les détériorations à l'intérieur, et

- le faisceau laser pulsé et la surface de la pièce en verre ou vitrocéramique (2) sont déplacés l'un par rapport à l'autre, de sorte que les points d'impact (80) des impulsions laser (8) sur la surface (20) de l'élément en verre ou vitrocéramique (2) s'alignent les uns à côté des autres le long de la ligne de séparation, et selon lequel,

- après la réalisation des détériorations (6) en forme de filaments, disposées les unes à côté des autres le long de la ligne de séparation (4), l'élément en verre ou vitrocéramique (3) est dégagé par séparation suivant la ligne de séparation (4), et selon lequel

- la surface de chant (24) de l'élément en verre ou vitrocéramique (3), qui est formée lors de la séparation, est façonnée en partie par rodage, de sorte que la surface de chant (24) présente au moins une zone (240) en forme de bande, créée par la réalisation des détériorations en forme de filaments et par la séparation et comportant des détériorations allongées en forme de filaments, s'étendant parallèlement les unes à côté des autres, dont la direction longitudinale s'étend perpendiculairement aux faces latérales (25, 26), ainsi qu'une zone (242) adjacente en forme de bande, qui subit un traitement ultérieur par rodage.

**2.** Procédé selon la revendication précédente, **caractérisé en ce que** des zones (242, 244) en forme de bandes qui sont adjacentes aux faces latérales (25, 26) sont façonnées par rodage.

**3.** Procédé selon l'une des revendications précédentes, **caractérisé en ce que** le rodage a pour effet de créer un biseau qui constitue une transition de la surface de chant (24) vers la face latérale (25, 26) adjacente.

**4.** Procédé selon l'une des revendications précédentes, **caractérisé en ce que** la séparation suivant la ligne de séparation (4) est réalisée ou favorisée en chauffant localement la pièce en verre ou vitrocéramique (2), le long de la ligne de séparation, de préférence au moyen d'un faisceau laser.

**5.** Procédé selon l'une des revendications précédentes, **caractérisé en ce que** la fréquence de répétition du laser à impulsions ultracourtes (10) et la vitesse d'avance, lors du déplacement du faisceau laser pulsé et de la surface de la pièce en verre ou vitrocéramique (2) l'un par rapport à l'autre, sont réglées de manière à ce que les détériorations en forme de filaments, disposées les unes à côté des autres, présentent une distance de centre à centre qui est comprise dans la plage allant de 1 à 15 micromètres, de préférence de 2 à 10 micromètres.

**6.** Procédé selon l'une des revendications précédentes, **caractérisé en ce que** lors du rodage, on règle pour le mouvement relatif entre le dispositif de rodage (13) et la surface de la pièce en verre ou vitrocéramique (2), une vitesse d'avance qui est comprise dans la plage allant de 5 mètres par minute à 40 mètres par minute, et de façon particulièrement avantageuse dans la plage allant jusqu'à 20 mètres par minute.

**7.** Procédé selon l'une des revendications précédentes, selon lequel le laser à impulsions ultracourtes (10) fonctionne en mode par salves, lors duquel les impulsions laser (8) sont émises sous forme de paquets d'impulsions.

**8.** Procédé selon l'une des revendications précédentes, **caractérisé en ce que** la fréquence de répétition des impulsions laser (8) est adaptée en fonction de la vitesse relative entre le laser (10) et la pièce en verre ou vitrocéramique (2).

**9.** Procédé selon l'une des revendications précédentes, **caractérisé en ce que** plus de 300 $\mu$J, de préférence plus de 400 $\mu$J, et de façon particulièrement avantageuse plus de 500 $\mu$J sont déposés par chaque impulsion laser (8) dans la pièce en verre ou vitrocéramique (2).

**10.** Elément en verre ou vitrocéramique (3) plat, comportant deux faces latérales (25, 26), situées en vis-à-vis, et une surface de chant (24) reliant les deux faces latérales (25, 26), la surface latérale (24) comprenant au moins une première zone de chant (240) allongée en forme de bande et au moins une deuxième zone de chant (242, 244) allongée en forme de bande qui est réalisée par meulage, sachant que ces zones de chant s'étendent dans la direction longitudinale, le long de la surface de chant (24) et le long des faces latérales (25, 26), la première zone de chant (240) présentant des détériorations (6) allongées en forme de filaments, disposées parallèlement les unes à côté des autres, notamment de façon équidistante, dont la direction longitudinale s'étend perpendiculairement aux faces latérales (25, 26) et le long de la surface de la première zone de chant (240).

**11.** Elément en verre ou vitrocéramique (3) plat selon la revendication précédente, **caractérisé en ce que** la surface de chant (24) présente deux zones de chant (242, 244) qui jouxtent chacune l'une des faces latérales (25, 26) et entre lesquelles s'étend la première zone de chant (240).

12. Elément en verre ou vitrocéramique (3) plat selon l'une des deux revendications précédentes, **caractérisé en ce qu'**il présente une épaisseur qui est comprise dans la plage allant de 1 à 20 millimètres, notamment dans la plage allant de 2 à 15 millimètres, et de façon particulièrement avantageuse dans la plage allant de 3 à 10 mm.

13. Elément en verre ou vitrocéramique (3) plat selon l'une des trois revendications précédentes, **caractérisé en ce que** la surface de chant (24) présente au moins localement un profil en C où la première zone de chant (240) s'étend entre deux deuxièmes zones de chant (242, 244) incurvées.

14. Elément en verre ou vitrocéramique (3) plat selon l'une des trois revendications précédentes, **caractérisé en ce que** les deuxièmes zones de chant (242, 244) forment chacune un biseau (20, 21) dont la direction de la normale se situe entre la normale de la première zone de chant (240) et la normale de la face latérale (25, 26) adjacente au biseau.

Fig. 1

Fig. 3

Fig. 2

Fig. 9

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015165548 A1
- US 2014239552 A1
- WO 2015113026 A2
- WO 2012006736 A2
- FR 2989294 A1
- KR 20140072448 A
- US 20120234807 A1